# EUROPÄISCHE PATENTANMELDUNG

(11) **EP 1 760 870 A2**
(43) Veröffentlichungstag der Anmeldung: **07.03.2007**
(21) Anmeldenummer: 06118282.0
(22) Anmeldetag: 02.08.2006
(51) Int. Cl.: H02M 7/219, H02M 5/458

(54) **Weitspannungs-Umrichter**

(30) Priorität: 06.09.2005 DE 102005042324
(71) Anmelder: SIEMENS AKTIENGESELLSCHAFT, 80333 München (DE)
(72) Erfinder: Brune, Richard, 90765, Fürth (DE); Göpfrich, Kurt, 91058, Erlangen (DE); Schierling, Hubert, 91052, Erlangen (DE); Schwesig, Günter, 91054, Erlangen (DE)

(57) **Zusammenfassung**

Die Erfindung betrifft einen Weitspannungs-Umrichter mit einem netz- und lastseitigen Stromrichter (2,4). Erfindungsgemäß sind die netz- und lastseitigen Stromrichter (2,4) gleichspannungsseitig mittels eines Hochsetzstellers (6) elektrisch leitend verbunden sind, wobei als Stromrichterventile (T1,T2;T3,T4;T5,T6) einer jeden Phase (R,S,T) des netzseitigen Stromrichters (2) ein bidirektionaler Schalter (24) und ein abschaltbarer Halbleiterschalter (26) vorgesehen sind, wobei der netzseitige Stromrichter (2) wechselspannungsseitig mit einem Filter (8) versehen ist, und wobei der lastseitige Stromrichter (4) gleichspannungsseitig mit einem Gleichspannungskondensator (14) versehen ist. Somit erhält man einen Weitspannungs-Umrichter ohne Derating mit dedizierter Ausgangsspannung.

## Beschreibung

Die Erfindung bezieht sich auf einen Weitspannungs-Umrichter, der einen netz- und lastseitigen Stromrichter aufweist.

Ein elektrischer Motor mit einer vorbestimmten Motorspannung kann an unterschiedliche Netze angeschlossen werden. Diese Netze unterscheiden sich voneinander durch deren Netzspannungen. Die wesentlichen Netzspannungen eines dreiphasigen Netzes sind 200 V bis 240 V, 380 V bis 480 V, 500 V bis 600 V und 660 V bis 690 V. Für den Betrieb dieses Motors wird ein Umrichter benötigt, der zwischen einem speisenden Netz und dem Motor geschaltet wird.

Ein derartiger Umrichter weist netz- und lastseitig einen Stromrichter auf, die gleichspannungsseitig miteinander verknüpft sind. Als lastseitiger Stromrichter wird überwiegend ein selbstgeführter Pulsstromrichter verwendet. Netzseitig können unterschiedliche Stromrichter verwendet werden. Ein handelsüblicher einfacher Umrichter, der auch als Frequenzumrichter bezeichnet wird, weist als netzseitigen Stromrichter eine Diodenbrücke auf. Dieser ungesteuerte netzseitige Stromrichter ist gleichspannungsseitig mittels eines Spannungszwischenkreises, der wenigstens einen Kondensator aufweist, mit den gleichspannungsseitigen Anschlüssen des selbstgeführten Pulsstromrichters verbunden.

Soll Energie in das speisende Netz zurückgespeist werden, so wird ein Diodengleichrichter verwendet, dessen Dioden jeweils ein abschaltbarer Halbleiterschalter elektrisch antiparallel geschaltet ist. Diese abschaltbaren Halbleiterschalter sind jeweils während der Stromführungszeiten der zugehörigen Dioden, die durch die natürlichen Kommutierungszeitpunkte bestimmt sind, leitend geschaltet. Netzseitig weist dieser netzfrequent gesteuerte Stromrichter einen Filter auf, das drei in Stern oder Dreieck geschaltete Kondensatoren aufweist. Der Spannungszwischenkreis, der gleichspannungsseitig den netzseitigen Stromrichter mit dem lastseitigen Stromrichter verbindet, ist bei dieser Umrichtertopologie kondensatorlos. Durch die Ausgestaltung des netzseitigen Stromrichters, der auch als Fundamental Frequency Front End (F³E) bezeichnet wird, ist dieser Umrichter rückspeisefähig.

Bei einer weiteren Umrichtertopologie wird als netzseitiger Stromrichter anstelle eines Diodengleichrichters ein selbstgeführter Pulsstromrichter verwendet, der wechselspannungsseitig in den Zuleitungen jeweils eine Drossel aufweist. Gleichspannungsseitig ist dieser netzseitige Stromrichter, der auch als Active Front End (AFE) bezeichnet wird, mittels eines Spannungszwischenkreises, der wenigstens einen Kondensator, vorzugsweise einen Elektrolyt-Kondensator, aufweist mit den gleichspannungsseitigen Anschlüssen des lastseitigen Stromrichters, insbesondere eines selbstgeführten Pulsstromrichters, elektrisch leitend verbunden. Durch die Verwendung eines AFEs als netzseitigen Stromrichter ist dieser Umrichter netzfreundlich und rückspeisefähig. Außerdem wird eine Zwischenkreisspannung konstant auf einen vorbestimmten Wert geregelt.

Bei einem herkömmlichen Weitspannungs-Umrichter, dessen netzseitiger Stromrichter in einer der genannten Topologien (Diodengleichrichter, F³E, AFE) ausgeführt ist, muss man ein ausgeprägtes Leistungsderating oder aber eine höhere Verlustleistung in Kauf nehmen. Aus diesen Gründen wird ein Umrichter ausgewählt, der netzspannungsseitig an die Netzspannung eines speisenden Netzes und lastseitig an eine Leistungsanforderung eines anzutreibenden Motors mit vorbestimmter Motorspannung angepasst ist.

Der Erfindung liegt nun die Aufgabe zugrunde, einen Weitspannungs-Umrichter anzugeben, bei dessen Betrieb kein Leistungsderating mehr auftritt.

Erfindungsgemäß wird diese Aufgabe mit den Merkmalen des Anspruchs 1 gelöst.

Dadurch, dass als Stromrichterventile einer jeden Phase eines netzseitigen Stromrichters ein bidirektionaler Schalter und ein abschaltbarer Halbleiterschalter vorgesehen sind, dass dieser netzseitige Stromrichter wechselspannungsseitig einen Filter aufweist, und dass der netzseitige Stromrichter gleichspannungsseitig mittels eines Hochsetzstellers mit gleichspannungsseitigen Anschlüssen des lastseitigen Stromrichters dieses Weitspannungs-Umrichters verknüpft ist, kann dieser erfindungsgemäße Weitspannungs-Umrichter an ein Netz mit einer beliebigen Netzspannung angeschlossen werden, ohne dass ein Leistungsderating auftritt. Der im Spannungszwischenkreis platzierte Hochsetzsteller generiert ausgangsseitig unabhängig von einer Eingangsspannung, deren Amplitude einen geringeren Wert aufweist, als den Wert der Amplitude der geregelten Ausgangsspannung, eine Ausgangsspannung mit einer vorbestimmten Amplitude. Dadurch wird der lastseitige Stromrichter immer an einer konstanten Gleichspannung mit einer vorbestimmten Amplitude betrieben. Mittels des erfindungsgemäß ausgebildeten netzseitigen Stromrichters wird eine Gleichspannung generiert, die unabhängig von der Netzspannung des speisenden Netzes einen Wert zwischen Null und einem maximalen Wert annehmen kann. Diese generierte Gleichspannung ist die Eingangs-Gleichspannung des dem netzspannungsseitigen Stromrichter nachgeschalteten Hochsetzstellers.

Damit die Drossel des Hochsetzstellers ein geringes Bauvolumen einnimmt, werden die abschaltbaren Halbleiterschalter der Stromrichterventile des Hochsetzstellers hochfrequent getaktet. Als Hochfrequenz wird eine Frequenz mit wenigstens 20kHz bis zu mehren 100kHz bezeichnet. Diese abschaltbaren Halbleiterschalter der Stromrichterventile des Hochsetzstellers bestehen vorteilhafter Weise wegen der hohen Taktfrequenz aus Siliziumkarbid.

Ein Schalter wird als bidirektionaler Schalter bezeichnet, wenn er sowohl in beiden Richtungen Strom führen als auch in beide Richtungen Spannung sperren kann. Solche bidirektionalen Schalter sind auf dem Gebiet der Umrichtertopologie "Matrixumrichter" bekannt. Mittels dieser bidirektionalen Schalter als obere oder untere Stromrichterventile des netzseitigen Stromrichters kann unabhängig von der Amplitude der Netzspannung des speisenden Netzes eine Gleichspannung am gleichspannungsseitigen Anschluss des netzseitigen Stromrichters generiert werden, die mittels des Hochsetzstellers auf eine vorbestimmte Amplitude der Gleichspannung für den lastseitigen Stromrichter geregelt wird. Werden diese bidirektionalen Schalter des netzseitigen Stromrichters gepulst betrieben, kann netzseitig ein sinusförmiger Strom sowohl motorisch als auch generatorisch eingeprägt werden.

Die Pulsfrequenz, mit der die abschaltbaren Halbleiterschalter der bidirektionalen Schalter getaktet werden, bestimmt das Bauvolumen der Kondensatoren des netzseitigen Filters. Eine möglichst hohe Pulsfrequenz mit geringen Schaltverlusten wird bei der Ausführungsform des bidirektionalen Schalters als schaltbare Diodenbrücke dadurch erreicht, dass als abschaltbarer Halbleiterschalter ein Feldeffekttransistor aus Siliziumkarbid vorgesehen ist. Werden als bidirektionaler Schalter zwei abschaltbare Halbleiterschalter in der Topologie "Common Emitter Mode" oder "Common Collector Mode" verwendet, so ist es vorteilhaft, die Freilaufdioden dieser abschaltbaren Halbleiterschalter in Siliziumkarbid auszuführen.

Zur weiteren Erläuterung der Erfindung wird auf die Zeichnung Bezug genommen, in der eine Ausführungsform eines erfindungsgemäßen Weitspannungs-Umrichters schematisch veranschaulicht ist.
- FIG 1: zeigt ein Ersatzschaltbild eines WeitspannungsUmrichters nach der Erfindung, die
- FIG 2: zeigt ein Ersatzschaltbild einer ersten Ausführungsform eines bidirektionalen Schalters des netzseitigen Stromrichters des WeitspannungsUmrichters nach FIG 1 und die
- FIG 3 und 4: zeigen jeweils ein Ersatzschaltbild einer weiteren Ausführungsform eines bidirektionalen Schalters.

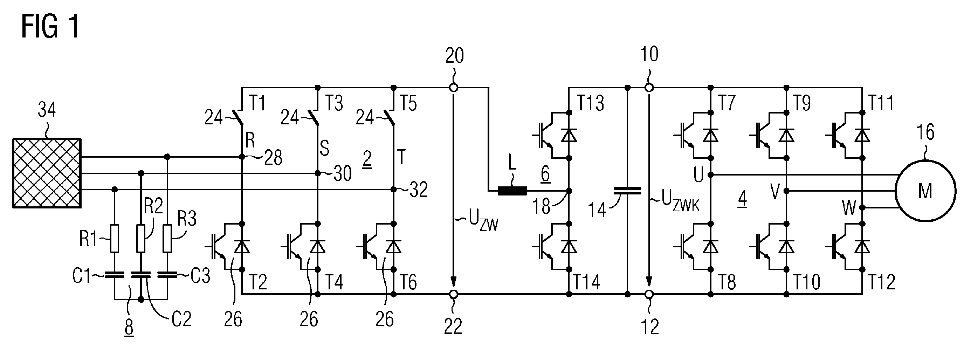

Gemäß dem Ersatzschaltbild nach FIG 1 weist der erfindungsgemäße Weitspannungs-Umrichter einen netzseitigen Stromrichter 2, einen lastseitigen Stromrichter 4, einen Hochsetzsteller 6 und ein netzseitiges Filter 8 auf. Der netzseitige Stromrichter 2 ist gleichspannungsseitig mittels des Hochsetzstellers 6 mit gleichspannungsseitigen Anschlüssen 10 und 12 des lastseitigen Stromrichters 4 elektrisch leitend verknüpft. Elektrisch parallel zu diesen gleichspannungsseitigen Anschlüssen 10 und 12 des lastseitigen Stromrichters 4 ist ein Gleichspannungskondensator 14, insbesondere ein Elektrolyt-Kondensator, geschaltet. An den Ausgangsklemmen U,V und W des lastseitigen Stromrichters 4 ist ein Motor 16, insbesondere ein Drehstrommotor, angeschlossen. Als lastseitiger Stromrichter 4 ist ein selbstgeführter Pulsstromrichter vorgesehen, der als Stromrichterventile T7-T12 jeweils einen abschaltbaren Halbleiterschalter, insbesondere einen Insulated Gate Bipolar Transistor (IGBT), aufweist.

Der Hochsetzsteller 6, der gleichspannungsseitig den netzseitigen Stromrichter 2 mit dem lastseitigen Stromrichter 4 elektrisch leitend verbindet, weist zwei Stromrichterventile T13 und T14 und eine Drossel L auf. Diese beiden Stromrichterventile T13 und T14 weisen jeweils einen abschaltbaren Halbleiterschalter mit einer antiparallel geschalteten Diode auf. Ein Verbindungspunkt 18 dieser beiden Stromrichterventile T13 und T14 des Hochsetzstellers 6 ist mit einem ersten Anschluss der Drossel L verknüpft. Ein zweiter Anschluss dieser Drossel L ist mit einem gleichspannungsseitigen Ausgangs-Anschluss 20 des netzseitigen Stromrichters 2 elektrisch leitend verbunden. Der gleichspannungsseitige Ausgangs-Anschluss 22 ist direkt mit dem gleichspannungsseitigen Anschluss 12 des lastseitigen Stromrichters 4 verknüpft. Die Drossel L kann in zwei Teildrosseln oder in Form einer Drossel mit 2 Teilwicklungen ausgeführt werden, wobei die zweite Teildrossel bzw. Teilwicklung zwischen die Punkte 22 und 12 geschaltet wird. An den gleichspannungsseitigen Ausgangs-Anschlüssen 20 und 22 steht eine Ausgangsspannung U_{ZW} des netzseitigen Stromrichters 2 an, die auch als Zwischenkreisspannung U_{ZW} bezeichnet wird. Diese Ausgangsspannung U_{ZW} des netzseitigen Stromrichters 2 ist gleichspannungsseitig eine Eingangsspannung des Hochsetzstellers 6. Ausgangsseitig steht am Ausgang des Hochsetzsteller 6 eine konstante Zwischenkreisspannung U_{ZWK} an, deren Amplitude auf einen vorbestimmten Wert geregelt wird. Diese geregelte Zwischenkreisspannung U_{ZWK} wird vom Gleichspannungskondensator 14 gestützt.

Damit die Drossel L des Hochsetzstellers 6 ein geringes Bauvolumen einnehmen kann, müssen die Stromrichterventile T13 und T14 des Hochsetzstellers 6 möglichst hochfrequent getaktet werden. Werden als abschaltbare Halbleiterschalter der Stromrichterventile T13 und T14 IGBTs verwendet, so werden als antiparallel geschaltete Dioden, Dioden aus Siliziumkarbid verwendet. An Stelle von IGBTs als abschaltbare Halbleiterschalter der Stromrichterventile T13 und T14 können auch Feldeffekttransistoren (FET), insbesondere Sperrschicht-FETs oder Enhancement-MOSFETs, verwendet werden, die für die Verwendung im Hochsetzsteller 6 dieses Weitspannungs-Umrichters aus Siliziumkarbid gefertigt sind.

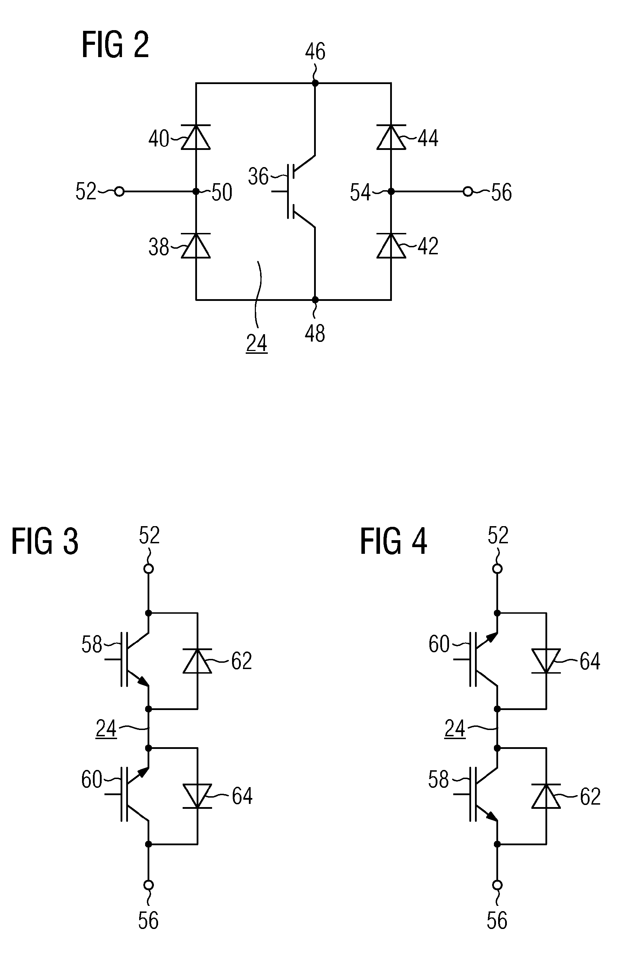

Der netzseitige Stromrichter 2 weist erfindungsgemäß als Stromrichterventile T1,T2 bzw. T3,T4 bzw. T5,T6 einer jeden Phase R,S und T einen bidirektionalen Schalter 24 und einen abschaltbaren Halbleiterschalter 26 auf. In der dargestellten Ausführungsform des netzseitigen Stromrichters 2 sind für die oberen Stromrichterventile T1,T3 und T5 jeweils ein bidirektionaler Schalter 24 vorgesehen. Ausführungsformen für einen bidirektionalen Schalter 24 sind in den Figuren 2 bis 4 näher dargestellt. Der abschaltbare Halbleiterschalter 26, der in dieser Ausführungsform jeweils für die unteren Stromrichterventile T2, T4 und T6 des netzseitigen Stromrichters 2 vorgesehen sind, weist einen IGBT mit einer antiparallel geschalteten Diode auf. Die IGBTs dieser abschaltbaren Halbleiterschalter 26 werden derart gesteuert, dass diese zu den natürlichen Stromführungszeiten der korrespondierenden Dioden leitend sind. Somit werden die IGBTs dieser abschaltbaren Halbleiterschalter 26 zu den natürlichen Kommutierungszeitpunkten angesteuert. Elektrisch parallel zu den netzseitigen Eingangs-Anschlüssen 28,30 und 32 dieses netzseitigen Stromrichters 2 ist ein Filter 8 geschaltet. Außerdem wird dieser Weitspannungs-Umrichter mittels dieser Eingangs-Anschlüsse 28,30 und 32 an ein speisendes Netz 34 angeschlossen. Dieses speisende Netz 34 kann eine Netzspannung mit einer Amplitude von beispielsweise 200 V bis 690 V aufweisen, wobei auch höhere Amplituden der Netzspannung möglich sind. Das Filter 8 weist drei Kondensatoren C1, C2 und C3 auf, die hier in Stern geschaltet sind. Diese können jedoch auch in Dreieck geschaltet werden. Dieses Filter 8 weist außerdem drei Dämpfungs-Widerstände R1,R2 und R3 auf, die jeweils elektrisch in Reihe zu einem Kondensator C1 bzw. C2 bzw. C3 geschaltet sind.

In der FIG 2 ist ein Ersatzschaltbild einer ersten Ausführungsform eines bidirektionalen Schalters 24 des netzseitigen Stromrichters 2 des Weitspannungs-Umrichters gemäß FIG 1 näher dargestellt. Gemäß diesem Ersatzschaltbild weist der bidirektionale Schalter 24 einen abschaltbaren Halbleiterschalter 36 und vier Dioden 38,40,42 und 44 auf. Diese vier Dioden 38,40,42 und 44 bilden eine Brückenschaltung. Der abschaltbare Halbleiterschalter 36 ist mit einem Anschluss 46 mit den Kathodenanschlüssen der beiden Dioden 40 und 44, sein zweiter Anschluss 48 mit den Anodenanschlüssen der beiden Dioden 38 und 42 elektrisch leitend verbunden. Ein Verbindungspunkt 50 der elektrisch in Reihe geschalteten Dioden 38 und 40 bilden einen ersten Anschluss 52 des bidirektionalen Schalters 24. Ein weiterer Verbindungspunkt 54 der elektrisch in Reihe geschalteten Dioden 42 und 44 bildet einen zweiten Anschluss 56 des bidirektionalen Schalters 24. Als abschaltbarer Halbleiterschalter 36 kann ein Feldeffekttransistor (FET) oder ein Insulated Gate Bipolar Transistor (IGBT) verwendet werden.

Von den im Handel erhältlichen unterschiedlichen Typen von Feldeffekttransistoren kommen für diesen bidirektionalen Schalter 24 entweder ein Sperrschicht-FET oder ein MOSFET in Frage. Im Ersatzschaltbild des bidirektionalen Schalters 24 ist ein n-Kanal Enhancement-MOSFET dargestellt. An Stelle dieses selbstsperrenden MOSFET's kann auch ein Sperrschicht-FET verwendet werden, der auch als Junction-Field-Effect-Transistor (JFET) bezeichnet wird.

Damit das netzseitige Filter 8 gemäß FIG 1 möglichst ein kleines Bauvolumen einnimmt, damit dieses Filter 8 im Weitspannungs-Umrichter integriert sein kann, wird zum Betrieb des abschaltbaren Halbleiterschalters 36 eine hohe Taktfrequenz benötigt. Unter einer hohen Taktfrequenz wird in dieser Anmeldung eine Frequenz aus einem Frequenzbereich von wenigstens 20kHz bis mehreren 100kHz, beispielsweise 200kHz, verstanden. Damit die Schaltverluste in einem akzeptablen Bereich bleiben, wird als abschaltbarer Halbleiterschalter 36 ein MOSFET oder ein JFET aus Siliziumkarbid verwendet.

In der FIG 3 ist eine zweite Ausführungsform des bidirektionalen Schalters 24 dargestellt. Dabei handelt es sich um ein Ersatzschaltbild eines bidirektionalen Schalters 24 in der Topologie "Common Emitter Mode". In der FIG 4 ist eine weitere Ausführungsform des bidirektionalen Schalters 24 dargestellt. Bei dieser weiteren Ausführungsform des bidirektionalen Schalters 24 handelt es sich um einen bidirektionalen Schalter 24 in der Topologie "Common Collector Mode". Diese beiden bidirektionalen Schalter 24 weisen jeweils zwei abschaltbare Halbleiterschalter 58 und 60 auf, die antiseriell geschaltet sind. In der FIG 3 sind diese beiden abschaltbaren Halbleiterschalter 58 und 60 derart antiseriell geschaltet, dass deren Emitter-Anschlüsse miteinander elektrisch leitend verbunden sind. Aus diesem Grund wird diese antiserielle Schaltung der beiden abschaltbaren Halbleiterschalter 58 und 60 auch als Common Emitter Mode bezeichnet. In der FIG 4 sind die beiden abschaltbaren Halbleiterschalter 58 und 60 derart antiseriell geschaltet, dass deren Kollektor-Anschlüsse miteinander elektrisch leitend verbunden sind. Gemäß der Verknüpfung der Kollektor-Anschlüsse wird diese Verschaltung Common Collector Mode bezeichnet. Als abschaltbarer Halbleiterschalter 58 und 60 werden IGBT's verwendet, die jeweils eine antiparallel geschaltete Diode 62 und 64 aufweisen. An den Anschlüssen 52 und 56 des bidirektionalen Schalters 24 kann man die interne Topologie dieses bidirektionalen Schalters erkennen. Bei dem bidirektionalen Schalter in der Topologie "Common Emitter Mode" gemäß FIG 3 bilden die Kollektor-Anschlüsse der beiden abschaltbaren Halbleiterschalter 58 und 60 die Anschlüsse 52 und 56 des bidirektionalen Schalters 24. Gemäß FIG 4 bilden die Emitter-Anschlüsse der beiden abschaltbaren Halbleiterschalter 58 und 60 die Anschlüsse 52 und 56 des bidirektionalen Schalters 24. Derartige bidirektionale Schalter 24 werden bei einem Matrixumrichter verwendet, bei dem neun dieser bidirektionalen Schalter in einer 3x3-Matrix verschaltet sind.

Damit auch bei dieser Verwendung von bidirektionalen Schalter 24 das netzseitige Filter 8 möglichst ein kleines Bauvolumen einnehmen kann, wird zum Betrieb der abschaltbaren Halbleiterschalter 58 und 60 des bidirektionalen Schalters 24 eine hohe Taktfrequenz benötigt. Damit diese auch realisiert werden kann, werden Dioden 62 und 64 aus Siliziumkarbid verwendet.

Mit dieser erfindungsgemäßen Umrichter-Topologie erhält man einen Weitspannungs-Umrichter ohne Derating mit dedizierter Ausgangspannung. Der lastseitige Stromrichter 4, insbesondere ein selbstgeführter Pulsstromrichter, kann nun leistungsmäßig optimiert werden, da unabhängig vom speisenden Netz gleichspannungsseitig immer eine vorbestimmte Gleichspannung mit geregelter Amplitude ansteht. Mit diesem erfindungsgemäßen Weitspannungs-Umrichter kann ein Motor, insbesondere ein Drehstrommotor, einer vorbestimmten Leistung mit einer definierten Motorspannung an den wesentlichen Netzen (3AC200V-240V,3AC380V-480V,3AC500V-600V,3AC660V-690V) bei minimierter Verlustleistung und voller Leistungsbereitstellung im gesamten Weitspannungsbereich betrieben werden. Für einen Maschinenbauer der bei seinen Maschinen zum Antreiben einzelner Komponenten dieser Maschinen nur einen Typ von Motor mit vorbestimmter Leistung und vorbestimmter Motorspannung verwenden möchte, kann nun mit diesem erfindungsgemäßen Weitspannungs-Umrichter seine Maschine für den genannten Weitspannungsbereich fertigen. Dadurch entfällt die Vorratshaltung mehrerer unterschiedlicher Umrichter.

## Patentansprüche

1. Weitspannungs-Umrichter mit einem netz- und lastseitigen Stromrichter (2,4), die gleichspannungsseitig mittels eines Hochsetzstellers (6) elektrisch leitend verbunden sind, wobei als Stromrichterventile (T1,T2;T3,T4;T5,T6) einer jeden Phase (R,S,T) des netzseitigen Stromrichters (2) ein bidirektionaler Schalter (24) und ein abschaltbarer Halbleiterschalter (26) vorgesehen sind, wobei der netzseitige Stromrichter (2) wechselspannungsseitig mit einem Filter (8) versehen ist, und wobei der lastseitige Stromrichter (4) gleichspannungsseitig mit einem Gleichspannungskondensator (14) versehen ist.

2. Weitspannungs-Umrichter nach Anspruch 1, **dadurch gekennzeichnet, dass** der Hochsetzsteller (6) zwei Stromrichterventile (T13,T14) und eine Drossel (L) aufweist, wobei diese beiden Stromrichterventile (T13,T14) elektrisch in Reihe geschaltet sind, deren Verbindungspunkt (18) mit einem Anschluss der Drossel (L) verknüpft ist.

3. Weitspannungs-Umrichter nach einem der Ansprüche 1 oder 2, **dadurch gekennzeichnet, dass** als bidirektionaler Schalter (24) ein abschaltbarer Halbleiterschalter (36) und vier Dioden (38,40,42,44) vorgesehen sind, dass diese vier Dioden (38,40,42,44) eine Brückenschaltung bilden, dass dieser abschaltbare Halbleiterschalter (36) mit den gleichspannungsseitigen Anschlüssen (46,48) der Brückenschaltung elektrisch leitend verknüpft ist, und dass die wechselspannungsseitigen Anschlüsse (50,54) der Brückenschaltung jeweils ein Anschluss (52,56) des bidirektionalen Schalters (24) bilden.

4. Weitspannungs-Umrichter nach einem der Ansprüche 1 oder 2, **dadurch gekennzeichnet, dass** als bidirektionaler Schalter (24) zwei abschaltbare Halbleiterschalter (58,60) jeweils mit einer antiparallel geschalteten Diode (62,64) vorgesehen sind, deren Emitter-Anschlüsse miteinander elektrisch leitend verbunden sind.

5. Weitspannungs-Umrichter nach einem der Ansprüche 1 oder 2, **dadurch gekennzeichnet, dass** als bidirektionaler Schalter (24) zwei abschaltbare Halbleiterschalter (58,60) jeweils mit einer antiparallel geschalteten Diode (62,64) vorgesehen sind, deren Kollektor-Anschlüsse miteinander elektrisch leitend verbunden sind.

6. Weitspannungs-Umrichter nach einem der vorgenannten Ansprüche, **dadurch gekennzeichnet, dass** das netzseitige Filter (8) drei Kondensatoren (C1,C2,C3) aufweist, die in Stern geschaltet sind.

7. Weitspannungs-Umrichter nach einem der Ansprüche 1 bis 5, **dadurch gekennzeichnet, dass** das netzseitige Filter (8) drei Kondensatoren (C1,C2,C3) aufweist, die in Dreieck geschaltet sind.

8. Weitspannungs-Umrichter nach einem der vorgenannten Ansprüche, **dadurch gekennzeichnet, dass** jedem Kondensator (C1,C2,C3) des netzseitigen Filters (8) ein Dämpfungs-Widerstand (R1,R2,R3) elektrisch in Reihe geschaltet ist.

9. Weitspannungs-Umrichter nach einem der vorgenannten Ansprüche, **dadurch gekennzeichnet, dass** als Stromrichterventile (T13,T14) des Hochsetzstellers (6) jeweils ein MOS-Feldeffekttransistor vorgesehen ist.

10. Weitspannungs-Umrichter nach einem der Ansprüche 1 bis 8, **dadurch gekennzeichnet, dass** als Stromrichterventile (T13,T14) des Hochsetzstellers (6) jeweils ein Sperrschicht-Feldeffekttransistor vorgesehen ist.

11. Weitspannungs-Umrichter nach Anspruch 3, **dadurch gekennzeichnet, dass** als abschaltbarer Halbleiterschalter (36) des bidirektionalen Schalters (24) ein MOS-Feldeffekttransistor vorgesehen ist.

12. Weitspannungs-Umrichter nach einem der Ansprüche 9 bis 11, **dadurch gekennzeichnet, dass** der Feldeffekttransistor aus Siliziumkarbid ist.

13. Weitspannungs-Umrichter nach einem der Ansprüche 4 oder 5, **dadurch gekennzeichnet, dass** die antiparallelen Dioden (62,64) der beiden abschaltbaren Halbleiterschalter (58,60) des bidirektionalen Schalters (24) aus Siliziumkarbid sind.
